# EUROPEAN PATENT APPLICATION

(11) **EP 0 959 261 A2**
(43) Date of publication of application: **24.11.1999**
(21) Application number: 99109694.2
(22) Date of filing: 17.05.1999
(51) Int. Cl.: F16D 65/12

(54) **Disc brake with high resistance to wear and thermo-mechanical strains**

(30) Priority: 21.05.1998 IT MI981136
(71) Applicant: Brembo Engineering S.p.A., 24035 Curno, (Bergamo) (IT)
(72) Inventor: Pacchiana, Giovanni Paolo, 24035 Curno (Bergamo) (IT); Tironi, Giovanni Marco, 24035 Curno (Bergamo) (IT)
(74) Representative: Lecce, Giovanni

(57) **Abstract**

A disc brake (1) having a high resistance to wear and thermo-mechanical strains comprising a hub (2) from material having good characteristics of elasticity, mechanical resistance and elongation, and a braking strip (4) having a swept braking surface (5) from metal matrix composite material, produced as separate pieces and connected to each other by a restrained joint with tangential and axial constraints and free from any radial constraints.

The tangential constraint is obtained by means of the insertion of projections (6) obtained on the external surface of the hub (2), in recesses (7) obtained on the internal surface of the braking strip (4) and constituted by two opposite side surfaces (8), flat and converging towards the rotation axis (3) and by a connecting surface (9) having an elliptic trend, whose smaller axis is such that said recess (7) does not interfere with the braking swept surface (5) and the greater axis is longer than the distance between said two side surfaces (8) in the connection point.

The axial constraint is realised by means of plates (12) opposite and fixed to two projections (6) of the adjoining hub (2).

## Description

The present invention relates to a disc brake having a high resistance to wear and thermo-mechanical strains.

More particularly, the present invention relates to a disc brake having a high resistance to wear and thermo-mechanical strains, wherein the braking strip and the hub are realised as separate pieces and connected to each other by means of a connection system allowing the transmission of the braking torque and the different radial expansions of the two pieces.

As is known, a type of braking device used in motor-cars is the disc brake constituted by a disc brake from metal, fixed to the axle of the wheel, astride of which pliers act that are fixed to the stub axle or the hub-holder of the vehicle, and provided with braking gaskets, generally known as "pads". The disc brake comprises a braking strip, provided with a swept braking surface, and a hub fixed to the axle of the wheel.

The pliers, hydraulically activated by means of brake cylinders, press the pads against the swept surface of the braking strip.

Therefore, the braking action is produced by the friction between the pads and the swept surface of the disc brake. The friction of the pads against the braking strip of the disc brake causes the dissipation of the kinetic energy of the masses to be heat braked, which produces the increase in the temperature of the disc brake, particularly high in correspondence of the swept surface.

For this reason, the braking strip must be particularly resistant both to the wear produced by the abrading action of the pads and the high temperatures.

On the contrary, such characteristics of wear resistance are not required of the hub, for which it is, instead, advantageous the use of a material allowing to obtain a complex geometry with high mechanical characteristics and a good elongation.

For these reasons it is technically advantageous, especially in high performance braking devices, to realise the disc brake in two parts: the braking part from a temperature and wear resistant material, and the hub from a material having the aforementioned mechanical characteristics.

A known material having the properties required for the realisation of the braking strip is the metal matrix composite material (MMC) which has, as a further advantage, a low specific weight. Such composite materials are, in fact, light alloys characterised by a high wear resistance, high modulus of elasticity and low coefficient of thermal expansion. The reduction in weight that may be achieved with such composite material, besides contributing to a large extent to the lightening of the vehicle, also involves a remarkable reduction in the non-suspended masses of the vehicle.

The use of the braking strip from metal matrix composite material involves, however, problems with regard to the connection to the hub that are of difficult solution. Such connection, in fact, besides ensuring a strong fastening of the strip to the hub, must take into account the different thermal expansion of the materials and the brittleness of the MMC strip.

The known connections used in the disc brakes do not allow to achieve these results. Actually, a friction connection using lag screws or bolts that tighten and lock the braking strip against a flange provided on the hub, or a cut-joint using screws or bolts that engage in calibrated seats in the hub flange and the braking strip, or also a restrained joint, realise not only a tangential constraint but also a radial constraint between the hub and the strip that prevents the possible radial extensions, such as those that take place during the heating of the hub and the strip, especially if they are made from different materials.

Another drawback is due to the fact that the metal matrix composite materials are very brittle and every hole or slit may give rise to cracks or brakings that extend across the whole surface.

Object of the present invention is to obviate the above drawbacks.

More particularly, object of the present invention is to provide a disc brake comprising a hub from material having good characteristics of elasticity and mechanical resistance and elongation, and a braking strip from metal matrix composite material, connected to each other by means of joints that ensure the transmission of the braking torque, the axial constraint between said parts and a high thermo-mechanical resistance.

A further object of the invention is to provide a novel type of the hub-braking strip connection in a disc brake that leaves free the different radial extension of both pieces, which is indispensable for the transmission of the braking torque, and the required mechanical resistance, and such as to avoid the onset of cracks or slits in the metal matrix composite material.

Under its more general aspect, the present invention allows to obtain the aforesaid objects and still other ones, by means of a disc brake constituted by a braking disc from metal matrix composite material, provided with a swept braking strip, and by a hub from a material having good characteristics of elasticity, mechanical resistance and elongation, produced as separate parts and connected to each other by means of a restrained joint with tangential and axial constraints and without any radial constraint.

The tangential constraint is obtained through a restrained joint of projections of the hub in recesses of the braking strip. Each recess comprises two flat and opposed side surfaces connecting with the projections of the hub, converging towards the disc rotation axis, to transmit the braking torque, and a connection surface between said flat opposite surfaces having an elliptic trend with a smaller axis such that said recess does not interfere with the swept surface, and a greater axis longer than the distance between said side surfaces in the connection point, to increase the discharge surface of the thermo-mechanical strains of the braking torque.

Each projection of the hub has flat side surfaces converging towards the hub rotation axis with the same inclination of the side surfaces of the recesses.

Preferably, each recess has a cross-section shaped as a mushroom having a stem and a head, with the opposite side surfaces of the stem flat and converging towards the disc rotation axis of the disc and the elliptically shaped head with the greater axis longer than the distance between the two opposite side surfaces in the connection point with the head.

The projections of the hub have an elastic or permanent deformation at least equal to the tangential coupling clearances between the projections and the recesses to tangentially strain in a uniform manner all the joints.

The required uniformity of the tangential strain may be realised either by permanent deformation by realising the hub from a high elongation material, or by elastic deformation, modifying the geometry of the hub projections.

The axial constraint may be obtained by means of plates opposite and fastened to two adjoining projections of the hub.

No element of the joint constrains the radial shiftings of the hub and the braking strip, which are therefore free and independent.

In this way, no co-actions take place ensuing from the heating transistors and the different characteristics of the materials and consequently no strains of thermal origin form. Besides, the mechanical strain is distributed across a wide surface, imparting the joint a high resistance to mechanical breakdown and, therefore, preventing the formation of cracks or breaks.

The hub may be produced from any material having good characteristics of elasticity and resistance to mechanical strains and elongation; suitable materials include aluminium, magnesium, titanium alloys, and the like.

The metal matrix composite material employed for the production of the braking strip is well known and available on the market. It is an alloy based on aluminium reinforced with ceramic particles, such as for instance silicon carbide, alumina, titanium boride, etc. Generally, an increase in the reinforcement percentage included in the matrix improves wear resistance, the mechanical properties and the stability at high temperatures, while the thermal expansion coefficient reduces. For this reason the more reinforced alloys are preferred, for instance with a content of reinforcing agent higher than 15% by weight. These alloys are produced by spontaneous or forced infiltration of the metal in the molten state between the interstices of a three-dimensional grid constituted by the reinforcing material, or by dispersion through agitation of the reinforcement in the matrix.

These alloys are known on the market, for instance, by the Lanxide mark, produced by the company of the same name, by the Duralcan mark, produced by the Alcan company, etc.

The constructive and functional characteristics of the disc brake of the present invention shall be better understood thanks to the following description wherein reference is made to the figures of the attached drawing, which represent a preferred embodiment reported by way of non limiting example and wherein:

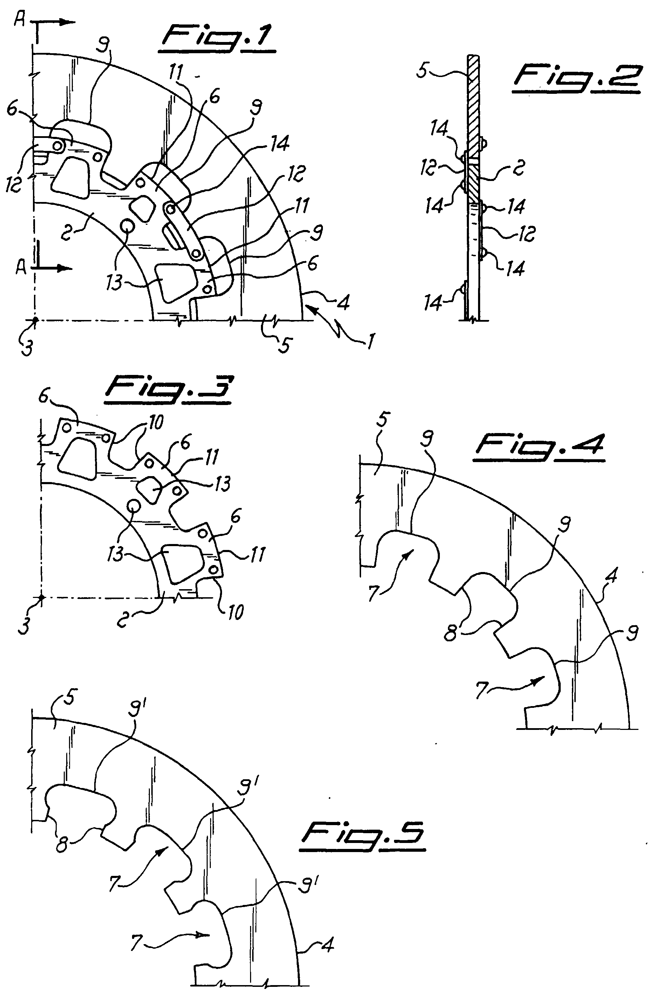

Figure 1 is a schematic front view of a portion of the disc brake of the present invention;
Figure 2 is a schematic view of a cross-section of the disc brake obtained with a plane passing along line A-A of Figure 1.
Figure 3 is a schematic front view of a portion of the hub of the disc brake of Figure 1;
Figure 4 is a schematic front view of a portion of the disc brake of Figure 1;
Figure 5 is a schematic front view of a portion of the braking strip of the disc brake of Figure 1, according to a preferred embodiment.

With special reference to the figures, the disc brake (1) of the present invention is constituted by a hub (2) having a rotation axis (3) and a braking strip (4) provided with a swept braking surface (5).

Hub (2) is preferably from aluminium alloy and the braking strip (4) is from metal matrix composite material known on the market by the mark Lanxide or Duralcan.

Hub (2) and the braking strip (4) are produced as separate pieces and connected to each other by means of a restrained joint with tangential and axial constraints and without any radial constraint.

Hub (2) is provided with at least four projections (6) along its external surface, preferably equidistant from one another. The number of projections (6) may range from 4 to 16.

The geometry of the projections (6) may be changed by means of exhausts (13) to obtain elastic strains.

The internal surface of the braking strip (4) is provided with recesses (7) whose number is equal to that of the protrusions (6), and they are also equidistant from one another.

Each recess (7) comprises two opposite flat side surfaces (8) converging towards the rotation axis of the disc (3), and a connecting surface having an elliptic trend, a smaller axis such that recess (7) does not interferes with the swept braking surface (5), and a greater axis longer than the distance between said side surfaces (8) in the connection point with the elliptic surface (9).

According to a preferred embodiment of the present invention, each recess (7) has a cross-section shaped as a mushroom having a stem and a head, with the opposite side surfaces of the stem (8) flat and converging towards the disc rotation axis of the hub (2) and the elliptically shaped head (9') with the greater axis longer than the distance between the two opposite flat side surfaces (8) in the connection point with the elliptic surface (9').

The projections (6) of hub (2) have flat side surfaces (10), connected to each other by a direct rectilinear or curvilinear connection (11). Said flat side surfaces (10) are converging towards the rotation axis (3) of hub (2) with the same inclination as the flat side surfaces (8) of recesses (7).

Projections (6) of hub (2) are inserted and engage in recesses (7) of the braking strip (4) by means of the coupling of the respective conjugated side surfaces (8, 10), realising in this way the tangential constraint.

For each projection (6)-recess (7) coupling, the conjugated surfaces in touch are flat and converging towards the rotation axis (3) of hub (2). This geometry allows different radial shiftings between strip (4) and hub (2), without jeopardising the coupling of the surfaces, i.e. without introducing undesired restrained connections or strains.

The tangential constraint necessary to transmit the braking torque of strip (4) to hub (2) is therefore realised by contact of the conjugated flat surfaces (8, 10) of hub (2) and the braking strips (4). Said surfaces are in touch and transmit from the strip to the hub thrusts tangentially directed with respect to the radial direction of the individual elements of the junction.

The axial constraint between hub (2) and the braking strip (4) is obtained by means of plates (12) opposite and rigidly fastened to two adjoining protrusions (6) of hub (2), in such a way as to leave free the radial deformation of the braking strip (4). For the fastening plates (12), any means may be used, preferably rivets (14).

Even though the invention has been described with reference to a preferred embodiment, many modifications and variants may be introduced in the disc brake of the present invention, in the light of the above teachings. It is therefore understood that the present invention comprises all the changes and variants that fall within the spirit and the protection scope of the following claims..

## Claims

1. A brake disk (1) having a high resistance to wear an thermo-mechanical strains comprising a hub (2), having a rotation axis from a material having good characteristics of elasticity, mechanical resistance and elongation and a braking strip (4) having a swept braking surface (5) from metal matrix composite material, produced as separate pieces and connected to each other by a restrained joint with tangential and axial constraints and free from any radial constraints.

2. The disc brake according to claim 1, characterised in that hub (2) is provided with at least four projections (6) along its external surface, the braking strip (4) is provided with recesses (7) along its internal surface, whose number is equal to that of projections (6) and the tangential constraint is obtained by insertion of projections (6) of hub (2) in recesses (7) of the braking strip (4).

3. The disc brake according to claim 2, characterised in that each recess (7) comprises two opposite flat side surfaces (8) converging towards the rotation axis (3) of hub (2), to transmit the braking torque, and a connecting surface (9) between said flat side surface (8) having an elliptic trend with a smaller axis such as not to interfere with the swept braking surface (5) and a greater axis longer than the distance between said two side surfaces (8) in the connection point with the elliptic surface.

4. The disc brake according to any of the preceding claims, characterised in that each recess (7) has a cross-section shaped as a mushroom having a stem and a head, with the opposite side surfaces of the stem (8) flat and converging towards the disc rotation axis (3) of hub (2) and the elliptically shaped head (9') with a greater axis longer than the distance between the two flat surfaces (8) in the connection point with the elliptic surface (9').

5. The disc brake according to any of the preceding claims, characterised in that the projections (6) of hub (2) have flat side surfaces (10) connected to each other by a direct connection (11) either rectilinear or curvilinear; said flat side surfaces (7) being convergent towards the rotation axis (3) of hub (2) with the same inclination of the flat side surfaces (8) of recesses (7).

6. The disc brake according to any of the preceding claims, characterised in that the tangential constraint is obtained by coupling the respective side surfaces (8, 10) of projections (6) and recesses (7); for each coupling, the conjugated surfaces in touch being flat and converging towards the rotation axis (3) of hub (2).

7. The disc brake according to any of the preceding claims, characterised in that the projections are in number of from 4 to 16.

8. The disc brake according to any of the preceding claims, characterised in that the braking strip (4) is made from aluminium reinforced with ceramic particles such as silicon carbide, alumina and titanium boride.

9. The disc brake according to any of the preceding claims, characterised in that hub (2) is made from aluminium, magnesium or titanium alloys.

10. The disc brake according to any of the preceding claims, characterised in that the constraint for the axial positioning of the braking strip with respect to the hub, is realised by means of plates (12) opposite and rigidly fastened to two adjoining projections (6) of hub (2).
